# FASCICULE DE BREVET EUROPEEN

(11) **EP 3 992 821 B1**
(45) Date de publication et mention de la délivrance du brevet: **28.01.2026**
(21) Numéro de dépôt: 20315441.4
(22) Date de dépôt: 30.10.2020
(51) Int. Cl.: H04L 9/40, G06F 21/30, H04W 12/06, H04L 9/32

(54) **PROCÉDÉ D'AUTHENTIFICATION ANONYME D'UN CLIENT D'UN SITE PRESTATAIRE PAR L'INTERMÉDIAIRE D'UN TIERS DE CONFIANCE**
ANONYMES VERFAHREN ZUR AUTHENTIFIZIERUNG EINES KUNDEN EINER ANBIETER-WEBSITE DURCH EINE VERTRAUENSWÜRDIGE DRITTE PARTEI
METHOD FOR ANONYMOUS AUTHENTICATION OF A CLIENT OF A SERVICE PROVIDER SITE BY MEANS OF A TRUSTED THIRD PARTY

(43) Date de publication de la demande: 04.05.2022
(73) Titulaire: SECURKEYS, 76100 Rouen (FR)
(72) Inventeur: Métivier, Pascal, 75026 Paris (FR)
(74) Mandataire: Dupuis-Latour, Dominique

(56) Documents cités:
- US-A1- 2013 055 362
- US-A1- 2017 054 707
- US-B2- 8 806 596
- ALACA FURKAN: "STRENGTHENING PASSWORD-BASED WEB AUTHENTICATION THROUGH MULTIPLE SUPPLEMENTARY MECHANISMS", THESIS, 31 May 2018 (2018-05-31), Ottawa, Ontario, Canada, pages 1 - 184, XP055508758, Retrieved from the Internet <URL:https://www.ccsl.carleton.ca/~falaca/alaca_phd_thesis.pdf>

## Description

L'invention concerne les techniques d'authentification de clients d'un site web opéré par un prestataire, avec pour cette authentification l'intervention d'un tiers de confiance indépendant et physiquement distinct du site web.

### Domaine technique

Lorsqu'un client se connecte à un site web pour commander une marchandise ou une prestation, il existe des situations dans lesquelles il est essentiel que le site web puisse certifier de façon indubitable l'identité de ce client, notamment en raison du caractère très sensible des prestations ou des articles commandés par ce dernier.

Ainsi, dans un exemple caractéristique - mais en aucune façon limitatif de l'invention - un site web propose de réaliser la duplication de clés à partir d'images d'une clé d'origine prises par le client au moyen de son smartphone et envoyées au site distant, sans que le client n'ait besoin de se rendre chez un serrurier ou dans une boutique de duplication de clés, et sans qu'il n'ait à se séparer temporairement de sa clé pour la remettre ou l'envoyer à un tiers. Par analyse des clichés de la clé qui lui sont envoyés, le site distant recherche le modèle de la clé, reconnaît ses caractéristiques propres (fabricant, denture, codage des dents, des gorges ou des trous, etc.) et génère des instructions destinées à un atelier de façonnage qui taillera une clé en fonction de ces indications à partir d'une ébauche, par fraisage ou encore par impression 3D. Le duplicata ainsi réalisé sera envoyé au client qui en a passé la commande, suivant les instructions de ce dernier.

Dans cet exemple, il est important de s'assurer de l'identité réelle de la personne passant la commande : en effet, cette commande pourrait aussi bien être passée par un individu n'ayant que temporairement la clé en sa possession, ou l'ayant subtilisée, ou qui aurait même simplement photographié celle-ci, et cherchant à en faire réaliser un duplicata à l'insu du véritable détenteur de cette clé.

### État de la technique antérieure

Il existe diverses techniques permettant de pallier ce risque, en particulier par envoi d'un SMS de demande de confirmation au smartphone du client authentique, dont le numéro de téléphone est déjà connu du site web. Il est alors demandé au destinataire du SMS de composer un code, connu de lui ou incorporé au SMS, pour valider la bonne réception du message, confirmer ainsi la commande et permettre la poursuite de la transaction. Le document US 2013/055362 divulgue l'authentification d'un utilisateur auprès d'un serveur Web via un serveur d'authentification. Le document US 8 806 596 divulgue l'authentification d'un utilisateur auprès d'un fournisseur de services via un fournisseur d'identité.

Toutefois, cette technique ne permet pas vraiment de garantir l'anonymat du client. Il est en effet aisé, si l'on dispose d'un numéro de téléphone, d'en trouver le propriétaire.

Dans certaines situations il peut être souhaitable d'introduire un degré de sécurité supplémentaire, en préservant l'anonymat complet du client à l'égard du site web, de manière à éviter que ne soient divulguées accidentellement ou frauduleusement des informations sensibles détenues par ce site, telles que : l'identité du client, son adresse personnelle, son numéro de téléphone portable, etc. Mais dans ce cas le site web, qui ne détient plus le numéro de téléphone du client, n'a plus la possibilité de lui envoyer un SMS de demande de confirmation de la commande.

Le but de l'invention est d'apporter une solution à cette limitation, en proposant un procédé d'authentification qui, tout en assurant une sécurité maximale du processus d'authentification, ne requière aucun stockage du numéro de téléphone du client par le site web, et permette néanmoins l'envoi au client d'une demande de confirmation sur son smartphone, au moyen du numéro de téléphone attaché à cet appareil.

En d'autres termes, il s'agit d'effectuer de façon anonyme une identification fiable et sécurisée d'un client passant une commande à un site web, typiquement par l'intermédiaire d'un lien web incorporé à un mail envoyé au client et reçu sur son smartphone, ou encore au moyen d'une application incorporée à ce smartphone et propre au prestataire opérant le site web, ou par l'intermédiaire d'un ordinateur fixe ou portable. L'authentification sera, de façon caractéristique, réalisée non pas par le prestataire depuis son site web, mais intégralement par un "tiers de confiance" distinct, et généralement distant, relié au client et au site web par des liaisons de communication telles que le réseau internet.

Ici, l'"anonymat'' signifie que les données sensibles propres au client, notamment son numéro de téléphone et éventuellement son identité, son adresse personnelle, l'adresse IP de son téléphone mobile ou de son ordinateur ayant participé à une procédure d'authentification par mot de passe à usage unique (OTP), etc., ne sont pas connues du site web ou, à tout le moins, à supposer qu'elles en soient connues, ne circulent pas dans les échanges entre ce site et le client, évitant ainsi tout risque de fraude à ce niveau par usurpation d'identité ou interception clandestine.

Concrètement, du point de vue du site web, la fonctionnalité recherchée consiste à n'envoyer au tiers de confiance qu'un minimum d'informations, en tout état de cause seulement des informations, telles qu'un simple numéro de commande et une adresse mail de contact, qui en elles-mêmes ne révèlent rien de l'identité du client, et d'attendre en retour du tiers de confiance une réponse de nature purement binaire, validant ou invalidant la commande portant le numéro indiqué : si le message est un message validant la commande, alors le site web pourra engager la transaction avec le client conformément à la commande reçue, avec la certitude qu'il s'agit bien d'un client authentique (mais sans avoir à connaître aucun des paramètres de cette authentification, notamment sans avoir à connaître le numéro de téléphone et/ou l'adresse IP qui ont été utilisés pour cette authentification) ; dans le cas contraire, la procédure ne sera pas poursuivie, et la transaction refusée au client demandeur.

### Résumé de l'invention

À cet effet, l'invention propose un procédé d'authentification d'un client auprès d'un site prestataire par l'intermédiaire d'un tiers de confiance. Ce procédé est mis en oeuvre par un système distribué comprenant, reliés entre eux par des liaisons de communication à distance : un équipement utilisateur à disposition du client ; le site prestataire, recevant de l'équipement utilisateur une commande, formulée par le client, d'exécution d'une transaction; et un système sécurisé opérant au niveau du tiers de confiance.

Préalablement à l'exécution de la transaction, un protocole d'authentification comprenant les étapes suivantes est mis en oeuvre :
a) par l'équipement utilisateur, envoi de la commande au site prestataire ;
b) du site prestataire au tiers de confiance, envoi d'une requête de validation de la commande, ladite requête incluant au moins un numéro de commande et une adresse email du client ;
c) par le tiers de confiance, génération d'un message email avec un lien pointant sur une page web spécifique, identifiée par un identifiant unique, et envoi du message email à l'équipement utilisateur ;
d) après réception du message email par l'équipement utilisateur, par le client : ouverture du lien, saisie sur la page web d'un numéro de téléphone attaché à l'équipement utilisateur et soumission au tiers de confiance du numéro de téléphone saisi ;
e) par le tiers de confiance, après réception du numéro de téléphone, génération d'un identifiant aléatoire et envoi de l'identifiant aléatoire à l'équipement utilisateur via un canal de communication mettant en œuvre le numéro de téléphone ;
f) après réception de l'identifiant aléatoire sur l'équipement utilisateur, par le client : saisie sur la page web de l'identifiant aléatoire et soumission au tiers de confiance de l'identifiant aléatoire saisi ;
g) par le tiers de confiance, vérification de la concordance entre l'identifiant aléatoire généré à l'étape e) et l'identifiant aléatoire soumis par l'équipement utilisateur à l'étape f), génération d'un message correspondant de validation/invalidation de la commande, et envoi au site prestataire du message de validation/invalidation de la commande ; et
h) si le message reçu par le site prestataire est un message de validation de la commande, poursuite de la transaction par le site prestataire, avec mise en communication du site prestataire avec l'équipement utilisateur.

Selon diverses caractéristiques subsidiaires avantageuses :
- le message de validation/invalidation de la commande ne contient pas d'information relative au numéro de téléphone utilisé aux étapes d) et e) ;
- le canal de communication mettant en œuvre le numéro de téléphone utilisé à l'étape e) est un canal de transmission de messages SMS ;
- l'identifiant aléatoire est un identifiant numérique ou alphanumérique, ou bien un identifiant graphique de type code à barres ou code matriciel ;
- l'étape f) comprend le recueil et la vérification d'un identifiant biométrique du client et la vérification de cet identifiant biométrique par l'équipement utilisateur ;
- la page web reçue par le client à l'étape d) comprend une liste de documents justificatifs à soumettre, et l'étape f) comprend, outre la saisie et la soumission au tiers de confiance de l'identifiant aléatoire, le téléversement à destination du tiers de confiance des documents justificatifs correspondants ;
- il est prévu une étape d'enregistrement, dans une base de données du tiers de confiance, d'une rubrique de journalisation associée à la commande traitée, comprenant, outre le numéro de la commande reçu à l'étape b) : horodatage, adresse email du client reçue à l'étape b), numéro de téléphone saisi à l'étape d), identifiant aléatoire généré à l'étape e), informations relatives au paiement de la transaction par le client, et/ou documents justificatifs téléversés à l'étape f) ;
- la liaison de communication entre l'équipement utilisateur et le site prestataire est une liaison unidirectionnelle, le site prestataire ne renvoyant pas d'information à l'équipement utilisateur pendant l'exécution du procédé d'authentification du client ; et/ou
- les seules échanges d'informations entre le site prestataire et le tiers de confiance sont la transmission de la requête de validation de la commande à l'étape b), et la transmission du message de validation/invalidation de la commande à l'étape g).

### Brève description des dessins

La Figure 1 est un schéma synoptique fonctionnel présentant les différents intervenants impliqués par le procédé de l'invention.
La Figure 2 est un diagramme explicitant les phases successives du protocole de mise en œuvre du procédé d'authentification selon l'invention.

### Description d'un mode de réalisation

On va maintenant décrire un exemple de mise en œuvre de l'invention, en référence aux dessins annexés où les mêmes références désignent d'une figure à l'autre des éléments identiques ou fonctionnellement semblables.

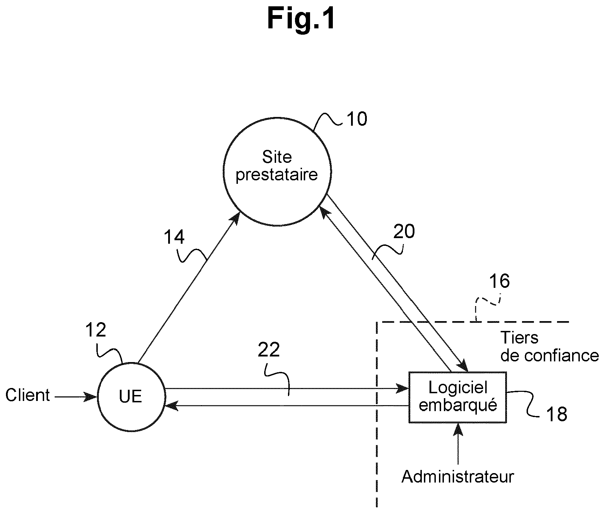

La Figure 1 illustre de façon schématique l'architecture générale du système avec lequel est mis en œuvre le procédé d'authentification de l'invention.

Il s'agit d'un système distribué comprenant un site web 10 offrant des prestations matérielles ou immatérielles nécessitant une authentification forte du client commandant ces prestations.

Il peut s'agir par exemple, comme dans l'exemple donné en introduction, d'une prestation de duplication de clé, ou de la vente d'articles destinés à un public autorisé (armes de chasse par exemple) ou encore permettant l'accès à des informations sensibles, dont la diffusion est restreinte. Ces exemples ne sont bien entendu aucunement limitatifs.

Ce site web (ci-après "site prestataire") est relié à un équipement utilisateur (UE) 12 à disposition d'un client du site.

L'équipement utilisateur 12 est typiquement un téléphone mobile de type smartphone doté de multiples fonctions, notamment d'accès internet, et sur lequel a été chargée une application propre au site prestataire et servant d'interface avec celui-ci. L'équipement utilisateur 12 communique avec le site prestataire 10 par une liaison 14, typiquement une liaison internet. Le client peut également se servir d'un ordinateur comme équipement utilisateur, pour toutes les fonctions décrites ci-après de communication via internet et de saisie ou d'affichage de données sur une page web. De plus, l'équipement utilisateur (smartphone et/ou ordinateur) peut être muni de fonctionnalités additionnelles de reconnaissance biométrique, par exemple d'un lecteur d'empreinte digitale ou d'un système de caméra à reconnaissance faciale, qui pourront être utilisés au cours du processus d'authentification pour vérifier une identité biométrique du client manipulant l'équipement utilisateur.

Le système met également en œuvre un "tiers de confiance" 16 au sein duquel est installé un système sécurisé 18 tel qu'un logiciel embarqué présentant toutes les garanties requises de sécurité. Le tiers de confiance 16 communique avec le site prestataire par une liaison bidirectionnelle 20, et avec l'équipement utilisateur 12 par une liaison bidirectionnelle 22.

Dans une mise en œuvre avantageuse (qui ne fait pas partie de l'invention compte tenu de son caractère non technique), le tiers de confiance est un huissier, c'est-à-dire un officier ministériel dont le statut est très précisément encadré par la loi, avec des obligations strictes, pénalement sanctionnées. Au surplus, les logiciels mis en œuvre par des officiers ministériels font l'objet d'un agrément spécifique, assurant de fait un degré supplémentaire de sécurité au niveau des moyens mis en œuvre.

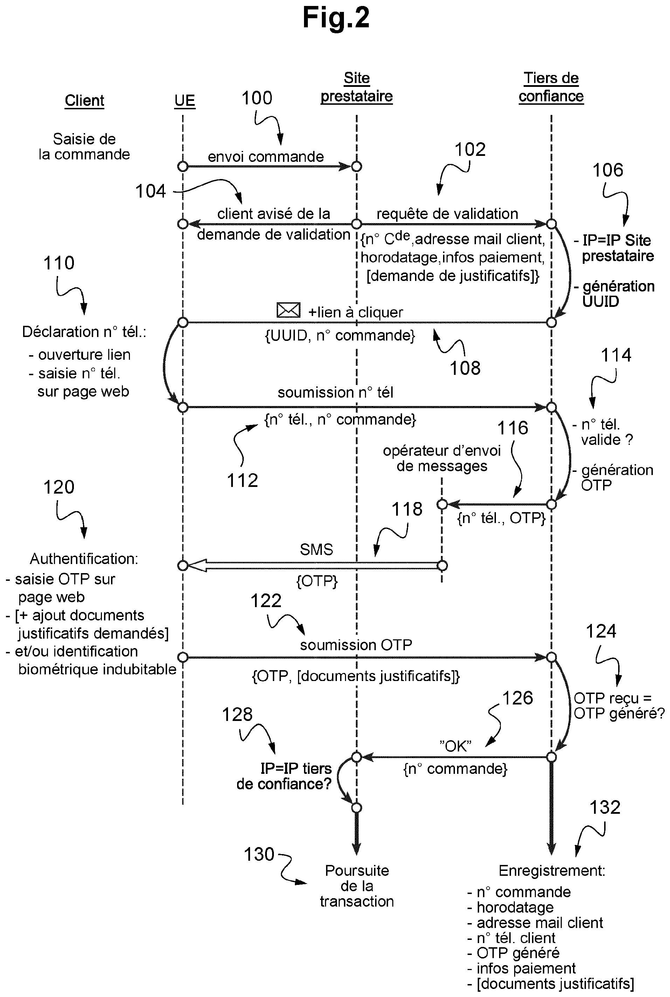

La Figure 2 illustre les phases successives du protocole de mise en œuvre du procédé d'authentification selon l'invention.

Le processus commence (étape 100) par la saisie de la commande et des paramètres de celle-ci par le client sur son équipement utilisateur, et la transmission de cette commande au site prestataire.

Ce dernier attribue un numéro à la commande et déclenche le protocole d'authentification proprement dit, opéré intégralement par le tiers de confiance sur la base d'une requête de validation de la commande transmise à ce dernier (étape 102). La requête comprend un minimum d'informations, telles que : numéro de la commande reçue du client, adresse mail de contact indiquée par le client, horodatage, ainsi qu'éventuellement des informations relatives à la transaction de paiement telles qu'identité et confirmation de l'établissement de paiement (c'est-à-dire des informations qui pourront être réconciliées par la banque au moment du paiement). La requête de validation envoyée au tiers de confiance peut également inclure une demande de justificatifs à fournir par le client et qui devront être conservés sur le site du tiers de confiance, telles que : copie d'une pièce d'identité, copie d'un justificatif de domicile, attestation de propriété, copie d'un permis de conduire ou d'un permis de chasse, etc. Parallèlement, le client est avisé (étape 104) par le site prestataire qu'une demande de validation de sa commande vient d'être été envoyée à un tiers de confiance (un huissier, dans l'exemple donné plus haut), et qu'il va être mis en communication avec ce tiers pour s'authentifier auprès de lui, et éventuellement lui fournir des justificatifs, avant que la transaction avec le site prestataire ne se poursuive plus avant.

Sur la base de la requête de validation reçue, le tiers de confiance, après avoir vérifié que cette requête provient bien de l'adresse IP d'un site prestataire autorisé à interagir avec le logiciel embarqué 18, génère un identifiant unique pseudo-aléatoire, par exemple de type UUID (*Universally Unique IDentifier*) et adresse directement (c'est-à-dire sans passer par le site prestataire) . à l'équipement utilisateur un message email contenant un lien web à cliquer, identifié par l'UUID généré (étape 108).

Après réception de cet email, le client (étape 110) se rend sur le lien qui lui a été envoyé, qui lui donne accès à une page web lui présentant un formulaire dans lequel il saisit le numéro de son téléphone. Cette information est soumise (étape 112) au tiers de confiance, qui vérifie si le numéro de téléphone est d'un format valide (pas d'indicatif de pays étranger, et/ou indicatif faisant partie d'une liste d'indicatifs acceptables) et génère un identifiant aléatoire (étape 114). L'identifiant aléatoire peut être, dans sa forme la plus simple, un code numérique de type "OTP" (*One Time Password*) à 6 ou 8 chiffres, ou encore un code alphanumérique.

L'identifiant peut également prendre une autre forme, dès lors qu'il permet l'identification indubitable de l'équipement utilisateur requérant, par exemple un code à barres ou un code matriciel (QR Code, code Datamatrix, etc.) affichable sur l'écran du smartphone du client requérant.

Le tiers de confiance utilise alors une configuration SMS incorporée au logiciel embarqué 18 pour contacter un opérateur d'envoi de messages (étape 116) afin que ce dernier émettre, à destination du numéro de téléphone qui avait été saisi à l'étape 110, un SMS (étape 118) contenant l'identifiant aléatoire OTP.

Sur réception de ce SMS, le client saisit l'OTP reçu (étape 120) sur la page web qui avait été ouverte à l'étape 110, et soumet le formulaire au tiers de confiance (étape 122).

A ce stade, si les documents justificatifs ont été demandés par le site prestataire avec la requête de validation, le client téléverse (*uploads*) dans le formulaire ces documents (copie de sa pièce d'identité, etc.), ces documents étant transmis au tiers de confiance en même temps que la soumission de l'identifiant aléatoire OTP à l'étape 122.

L'étape 120 d'authentification par le client peut également prévoir, en variante ou en complément, une identification biométrique permettant d'assurer un degré supérieur de sécurité, telle que reconnaissance faciale ou reconnaissance d'empreinte digitale, par un dispositif incorporé au smartphone et/ou à l'ordinateur de l'équipement utilisateur du client.

L'étape suivante consiste, par le tiers de confiance, à vérifier (étape 124) que l'identifiant aléatoire OTP saisi par le client à l'étape 120 et soumis à l'étape 122 est bien le même que celui qui avait été précédemment généré à l'étape 114. Dans l'affirmative, le tiers de confiance notifie le site prestataire (étape 126) que le processus d'authentification s'est déroulé correctement ; dans le cas contraire, un message d'erreur lui est adressé et il est mis fin au processus, aussi bien côté site prestataire que côté tiers de confiance. Sur réception du message de validation de la commande, après avoir vérifié que ce message provient bien d'une- adresse IP du serveur du tiers de confiance (étape 128), le site prestataire considère que le client requérant a été valablement authentifié, et poursuit la transaction avec ce client (étape 130).

On notera que, de façon caractéristique de l'invention, le message de validation/invalidation de la commande adressé à l'étape 126 par le tiers de confiance au site prestataire ne contient que le numéro de la commande et une indication selon laquelle cette commande est valide ou invalide.

En d'autres termes, le site prestataire a la garantie que l'authentification a été faite par un numéro de téléphone valide, mais sans avoir connaissance de ce numéro. L'anonymat du client est ainsi totalement préservé à l'égard du site prestataire.

Le client a ainsi la garantie que ni son numéro de téléphone, ni le code de validation (identifiant aléatoire OTP), ni l'adresse IP qu'il a utilisée pour valider son numéro de téléphone n'ont été transmis au site web prestataire sur lequel il a passé sa commande.

Il en est de même des copies des justificatifs demandés (pièce d'identité, justificatif de domicile, etc.), qui ne seront pas connues ni communiquées au site prestataire. Ces informations sensibles seront conservées exclusivement au sein d'une base de données du tiers de confiance, c'est-à-dire de l'huissier dans l'exemple donné plus haut, avec toutes les garanties liées au statut de ce dernier.

Dans tous les cas, le tiers de confiance conserve une "empreinte juridique" de la procédure d'authentification, accessible en cas de besoin par l'administrateur du tiers de confiance, par exemple sur demande d'une commission rogatoire d'une autorité judiciaire. Cette "empreinte juridique" peut notamment comprendre : numéro de la commande, horodatage, adresse mail de contact donnée par le client, numéro de téléphone saisi par le client et utilisé pour l'envoi du SMS, identifiant aléatoire OTP utilisé pour l'authentification, adresse IP de l'appareil ayant confirmé le code aléatoire, et/ou informations relatives au paiement, ainsi que les éventuels documents justificatifs personnels qui ont été demandés au client pour autoriser l'exécution de sa commande.

## Revendications

1. Un procédé d'authentification d'un client auprès d'un site prestataire par l'intermédiaire d'un tiers de confiance,
le procédé étant mis en œuvre par un système distribué comprenant, reliés entre eux par des liaisons de communication à distance (14, 20, 22) :
un équipement utilisateur (12) à disposition du client ;
le site prestataire (10), recevant de l'équipement utilisateur (12) une commande, formulée par le client, d'exécution d'une transaction; et
un système sécurisé (18) opérant au niveau du tiers de confiance (16),
le procédé étant mis en œuvre, préalablement à l'exécution de la transaction, d'un protocole d'authentification comprenant les étapes suivantes :
a) par l'équipement utilisateur (12), envoi (100) de la commande au site prestataire (10) ;
b) du site prestataire (10) au tiers de confiance (16), envoi (102) d'une requête de validation de la commande, ladite requête incluant au moins un numéro de commande et une adresse email du client ;
c) par le tiers de confiance (16), génération (106) d'un message email avec un lien pointant sur une page web spécifique, identifiée par un identifiant unique, et envoi (108) du message email à l'équipement utilisateur (12) ;
d) après réception du message email par l'équipement utilisateur (12), par le client : ouverture du lien, saisie (110) sur la page web d'un numéro de téléphone attaché à l'équipement utilisateur (12) et soumission (112) au tiers de confiance (16), à partir de la page web, du numéro de téléphone saisi ;
e) par le tiers de confiance (16), après réception du numéro de téléphone, génération (114) d'un identifiant aléatoire (OTP) et envoi (116, 118) de l'identifiant aléatoire (OTP) à l'équipement utilisateur (12) via un canal de communication distinct mettant en œuvre le numéro de téléphone ;
f) après réception de l'identifiant aléatoire sur l'équipement utilisateur (12), par le client : saisie (120) sur la page web de l'identifiant aléatoire (OTP) reçu via le canal de communication mettant en œuvre le numéro de téléphone, et soumission (122) au tiers de confiance (16), via la page web, de l'identifiant aléatoire saisi ;
g) par le tiers de confiance (16), vérification (124) de la concordance entre l'identifiant aléatoire généré à l'étape e) et l'identifiant aléatoire soumis par l'équipement utilisateur à l'étape f), génération d'un message correspondant de validation/invalidation de la commande, et envoi (126) au site prestataire (10) du message de validation/invalidation de la commande ; et
h) si le message reçu par le site prestataire est un message de validation de la commande, poursuite (130) de la transaction par le site prestataire (10), avec mise en communication du site prestataire (10) avec l'équipement utilisateur (12).

2. Le procédé de la revendication 1, dans lequel le message de validation/invalidation de la commande ne contient pas d'information relative au numéro de téléphone utilisé aux étapes d) et e).

3. Le procédé de la revendication 1, dans lequel le canal de communication mettant en œuvre le numéro de téléphone utilisé à l'étape e) est un canal de transmission de messages SMS.

4. Le procédé de la revendication 1, dans lequel l'identifiant aléatoire (OTP) est un identifiant numérique ou alphanumérique.

5. Le procédé de la revendication 1, dans lequel l'identifiant aléatoire est un identifiant graphique de type code à barres ou code matriciel.

6. Le procédé de la revendication 1, dans lequel l'étape f) comprend en outre le recueil et la vérification d'un identifiant biométrique du client et la vérification de cet identifiant biométrique par l'équipement utilisateur (12).

7. Le procédé de la revendication 1, dans lequel la page web reçue par le client à l'étape d) comprend une liste de documents justificatifs à soumettre, et l'étape f) comprend, outre la saisie et la soumission au tiers de confiance de l'identifiant aléatoire, le téléversement à destination du tiers de confiance (16) des documents justificatifs correspondants ;

8. Le procédé de la revendication 1, comprenant en outre une étape d'enregistrement (132), dans une base de données du tiers de confiance (16), d'une rubrique de journalisation associée à la commande traitée, comprenant, outre le numéro de la commande reçu à l'étape b) : horodatage, adresse email du client reçue à l'étape b), numéro de téléphone saisi à l'étape d), identifiant aléatoire généré à l'étape e), informations relatives au paiement de la transaction par le client, et/ou documents justificatifs téléversés à l'étape f).

9. Le procédé de la revendication 1, dans lequel la liaison de communication (14) entre l'équipement utilisateur (12) et le site prestataire (10) est une liaison unidirectionnelle, le site prestataire (10) ne renvoyant pas d'information à l'équipement utilisateur (12) pendant l'exécution du procédé d'authentification du client.

10. Le procédé de la revendication 1, dans lequel les seules échanges d'informations entre le site prestataire (10) et le tiers de confiance (16) sont la transmission (102) de la requête de validation de la commande à l'étape b), et la transmission (126) du message de validation/invalidation de la commande à l'étape g).

## Patentansprüche

1. Ein Verfahren zur Authentifizierung eines Kunden auf einer Anbieter-Website mittels einer vertrauenswürdigen dritten Partei,
wobei das Verfahren durch ein verteiltes System durchgeführt wird, das, über Fernkommunikationsverbindungen (14, 20, 22) miteinander verbunden, Folgendes umfasst:
eine Benutzerausrüstung (12), die dem Kunden zur Verfügung steht;
die Anbieter-Website (10), die von der Benutzerausrüstung (12) eine von dem Kunden aufgegebene Bestellung der Ausführung einer Transaktion empfängt; und
ein gesichertes System (18), das im Bereich der vertrauenswürdigen dritten Partei (16) betrieben wird, wobei das Verfahren, vor dem Durchführen der Transaktion, ein Authentifizierungsprotokoll durchgeführt wird, die folgenden Schritte umfasst:
a) durch die Benutzerausrüstung (12), Versenden (100) der Bestellung an die Anbieter-Website (10);
b) von der Anbieter-Website (10) an die vertrauenswürdige dritte Partei (16), Versenden (102) einer Anforderung der Bestätigung der Bestellung, wobei die Anforderung wenigstens eine Bestellnummer und eine E-Mail-Adresse des Kunden enthält;
c) durch die vertrauenswürdige dritte Partei (16), Generieren (106) einer E-Mail-Nachricht mit einem Link, der auf eine spezifische Website führt, die durch eine eindeutige Kennung identifiziert ist, und Versenden (108) der E-Mail-Nachricht an die Benutzerausrüstung (12);
d) nach Empfang der E-Mail-Nachricht durch die Benutzerausrüstung (12), durch den Kunden: Öffnen des Links, Eingeben (110) auf der Website einer Telefonnummer, die der Benutzerausrüstung (12) zugewiesen ist, und Übermitteln (112) an die vertrauenswürdige dritte Partei (16), ausgehend von der Website, der eingegebenen Telefonnummer;
e) durch die vertrauenswürdige dritte Partei (16), nach Empfang der Telefonnummer, Generieren (114) einer Zufallskennung (OTP) und Versenden (116, 118) der Zufallskennung (OTP) an die Benutzerausrüstung (12) über einen gesonderten, die Telefonnummer verwendenden Kommunikationskanal;
f) nach Empfang der Zufallskennung auf der Benutzerausrüstung (12), durch den Kunden: Eingeben (120) auf der Website der über den die Telefonnummer verwendenden Kommunikationskanal empfangenen Zufallskennung (OTP) und Übermitteln (122) an die vertrauenswürdige dritte Partei (16), über die Website, der eingegebenen Zufallskennung;
g) durch die vertrauenswürdige dritte Partei (16), Überprüfen (124) der Übereinstimmung zwischen der in Schritt e) generierten Zufallskennung und der in Schritt f) an die Benutzerausrüstung (12) übermittelten Zufallskennung, Generieren einer entsprechenden Nachricht über die Bestätigung/Nichtbestätigung der Bestellung und Versenden (126) an die Anbieter-Website (10) der Nachricht über die Bestätigung/Nichtbestätigung der Bestellung; und
h) wenn die durch die Anbieter-Website empfangene Nachricht eine Nachricht über die Bestätigung der Bestellung ist, Fortsetzen (130) der Transaktion durch die Anbieter-Website (10) unter Herstellung der Kommunikation der Anbieter-Website (10) mit der Benutzerausrüstung (12).

2. Das Verfahren nach Anspruch 1, wobei die Nachricht über die Bestätigung/Nichtbestätigung der Bestellung keine Information bezüglich der in den Schritten d) und e) verwendeten Telefonnummer enthält.

3. Das Verfahren nach Anspruch 1, wobei der die Telefonnummer verwendende Kommunikationskanal, der in Schritt e) verwendet wird, ein Kanal zur Übertragung von SMS-Nachrichten ist.

4. Das Verfahren nach Anspruch 1, wobei die Zufallskennung (OTP) eine numerische oder alphanumerische Kennung ist.

5. Das Verfahren nach Anspruch 1, wobei die Zufallskennung eine graphische Kennung des Typs Barcode oder Matrixcode ist.

6. Das Verfahren nach Anspruch 1, wobei der Schritt f) ferner das Empfangen und das Überprüfen einer biometrischen Kennung des Kunden und das Überprüfen dieser biometrischen Kennung durch die Benutzerausrüstung (12) umfasst.

7. Das Verfahren nach Anspruch 1, wobei die von dem Kunden in Schritt d) empfangene Website eine Liste von als Nachweis dienenden Unterlagen enthält, die zu übermitteln sind, und Schritt f) neben dem Eingeben und dem Übermitteln an die vertrauenswürdige dritte Partei der Zufallskennung das Hochladen der entsprechenden als Nachweis dienenden Unterlagen zu der vertrauenswürdigen dritten Partei (16) umfasst;

8. Das Verfahren nach Anspruch 1, ferner umfassend einen Schritt des Speicherns (132), in einer Datenbank der vertrauenswürdigen dritten Partei (16), einer Protokollierungsaufzeichnungsrubrik, die der verarbeiteten Bestellung zugeordnet ist und die neben der in Schritt b) empfangenen Bestellnummer Folgendes enthält: Datum und Uhrzeit, in Schritt b) empfangene E-Mail-Adresse, in Schritt d) eingegebene Telefonnummer, in Schritt e) generierte Zufallskennung, Informationen bezüglich der Bezahlung der Transaktion durch den Kunden und/oder in Schritt f) hochgeladene als Nachweis dienende Unterlagen.

9. Das Verfahren nach Anspruch 1, wobei die Kommunikationsverbindung (14) zwischen der Benutzerausrüstung (12) und der Anbieter-Website (10) eine unidirektionale Verbindung ist, wobei die Anbieter-Website (10) während der Durchführung des Verfahrens zur Authentifizierung des Kunden keine Informationen an die Benutzerausrüstung (12) zurücksendet.

10. Das Verfahren nach Anspruch 1, wobei der einzige Informationsaustausch zwischen der Anbieter-Website (10) und der vertrauenswürdigen dritten Partei (16) das Übertragen (102) der Anforderung der Bestätigung der Bestellung in Schritt b) und das Übertragen (126) der Nachricht über die Bestätigung/Nichtbestätigung der Bestellung in Schritt g) ist.

## Claims

1. A method for authenticating a customer to a service provider site via a trusted third party,
the method being implemented by a distributed system comprising, linked together by remote communication links (14, 20, 22):
a user equipment (12) available to the customer ;
the service provider site (10), receiving from the user equipment (12) an order, by the customer, to execute a transaction; and
a secure system (18) operating at the trusted third party (16),
wherein the method, previously to the execution of the transaction, implements an authentication protocol comprising the following steps:
a) by the user equipment (12), sending (100) the order to the service provider site (10) ;
b) by the service provider site (10) to the trusted third party (16), sending (102) an order validation request, said request including at least an order number and an e-mail address of the client;
c) by the trusted third party (16), generating (106) an email message with a link pointing to a specific web page, identified by a unique identifier, and sending (108) the email message to the user equipment (12) ;
d) after receipt of the email message by the user equipment (12), by the customer: opening the link, entering (110) on the web page a telephone number attached to the user equipment (12), and submitting (112) the telephone number entered to the trusted third party (16), from the web page;
e) by the trusted third party (16), after receipt of the telephone number, generating (114) a random identifier (OTP), and sending (116, 118) the random identifier (OTP) to the user equipment (12) via a distinct communication channel implementing the telephone number;
f) after receipt of the random identifier on the user equipment (12), by the customer: entering (120), on the web page, the random identifier (OTP) received via the communication channel implementing the telephone number, and submitting (122) the random identifier entered to the trusted third party (16), via the web page;
g) by the trusted third party (16), verifying (124) the match between the random identifier generated in step e) and the random identifier submitted by the user equipment in step f), generating a corresponding order validation/invalidation message, and sending (126) the order validation/invalidation message to the service provider site (10); and
h) if the message received by the service provider site is an order validation message, continuing (130) the transaction by the service provider site (10), with communication establishment between the service provider site (10) and the user equipment (12).

2. The method of claim 1, wherein the order validation/invalidation message does not contain information relating to the telephone number used in steps d) and e).

3. The method of claim 1, wherein the communication channel implementing the telephone number used in step e) is a SMS message transmission channel.

4. The method of claim 1, wherein the random identifier (OTP) is a numeric or alphanumeric identifier.

5. The method of claim 1, wherein the random identifier is a graphic identifier such as a barcode or matrix code.

6. The method of claim 1, wherein step f) further comprises collecting and verifying a biometric identifier of the customer, and verifying this biometric identifier by the user equipment (12).

7. The method of claim 1, wherein the web page received by the customer in step d) comprises a list of supporting documents to be submitted, and step f) comprises, in addition to entering and submitting the random identifier to the trusted third party, uploading the corresponding supporting documents to the trusted third party (16).

8. The method of claim 1, further comprising a step of recording (132), in an database of the trusted third party (16), a log item associated with the processed order, which comprises, in addition to the order number received in step b): time stamp, customer email address received in step b), telephone number entered in step d), random identifier generated in step e), information relating to payment of the transaction by the customer, and/or supporting documents uploaded in step f).

9. The method of claim 1, wherein the communication link (14) between the user equipment (12) and the service provider site (10) is a unidirectional link, wherein the service provider site (10) does not send any information back to the user equipment (12) during the execution of the customer authentication process.

10. The method of claim 1, wherein the single information exchanges between the service provider site (10) and the trusted third party (16) are the transmission (102) of the order validation request in step b), and the transmission (126) of the order validation/invalidation message in step g).
